# EUROPEAN PATENT APPLICATION

(11) **EP 2 019 445 A2**
(43) Date of publication of application: **28.01.2009**
(21) Application number: 08252451.3
(22) Date of filing: 17.07.2008
(51) Int. Cl.: H01M 8/10, H01M 4/88, H01M 4/92

(54) **Electrode for fuel cell, electrolyte-dispersed solution for forming electrode, method of producing the solution, and polymer electrolyte fuel cell**

(30) Priority: 18.07.2007 JP 2007187355
(71) Applicant: TOYOTA JIDOSHA KABUSHIKI KAISHA, Toyota-shi, Aichi-ken, 471-8571 (JP)
(72) Inventor: Obata, Takeshi, c/o Toyota Jidosha Kabushiki Kaisha, Toyota-shi, Aichi-ken, 471-8571 (JP)
(74) Representative: Smith, Samuel Leonard

(57) **Abstract**

An electrolyte-dispersed solution for forming an electrode (31, 32) is prepared by dispersing carbon particles loaded with a PtCo catalyst and an electrolyte containing a Pt catalyst are dispersed in a solvent. In the process of dispersion, the Pt-catalyst containing Nafion becomes close to the PtCo-catalyst-loaded carbon particles. In the electrode formed through coating and drying of the electrolyte-dispersed solution, the solvent disappears, and thus the Pt-catalyst containing Nafion is deposited on a predominant region of a surface of each carbon particle on which the PtCo catalyst is not supported. Thus, each of the carbon particles contained in the electrode, on which the PtCo catalyst has been loaded, is also loaded, via Nafion, with the Pt catalyst contained in Nafion, at regions of the carbon particle where the PtCo catalyst is not supported.

## Description

### BACKGROUND OF THE INVENTION

### 1. Field of the Invention

This invention relates to a catalyst-loaded support contained in an electrode that is joined to an electrolyte membrane of a polymer electrolyte fuel cell, a method of producing the support, and a polymer electrolyte fuel cell including the electrode containing the catalyst-loaded support.

### 2. Description of the Related Art

The cell performance of polymer electrolyte fuel cells depends on the progress of electrochemical reactions at electrodes joined to electrolyte membranes. To promote the electrochemical reactions at the electrodes, carbon particles (electrically conductive support particles) loaded with a catalyst are mixed, along with a proton-conducting electrolyte, into the electrodes. The cell performance of the fuel cell having the catalyst-containing electrodes is effectively improved by reducing or suppressing overvoltage at the cathode, and various types of catalysts having high catalytic conversion efficiency have been proposed which are effective in reduction of the overvoltage. For example, a catalyst made of a material comprising a platinum base alloy, such as an alloy of platinum and cobalt (PtCo), is used. The alloy base catalyst, which has a high capability of adsorbing oxygen, also has a high ability to adsorb water. Thus, if the fuel cell is kept operating under a high load (large current), water formed at the cathode-side electrode (catalyst electrode) containing the alloy base catalyst is likely to remain or build up in regions on which the catalyst is supported, which may result in deterioration of drainage and an increased likelihood of so-called flooding.

In the meantime, various methods of loading supports with catalysts have been proposed. For example, it is proposed to apply two or more types of catalysts to a support structure by sputtering, as disclosed in Japanese Patent Application Publication No. 2006-134602 (JP-A-2006-134602) and Japanese Patent Application Publication No. 2006-134603 (JP-A-2006-134603).

The methods proposed in JP-A-2006-134602 and JP-A-2006-134603 identified above are meant to load the support with two or more catalyst materials, for example, an "A" catalyst material and a "B" catalyst material, by simultaneously applying the "A" catalyst material and "B" catalyst material to the support by sputtering. In this case, however, the "A" material and "B" material are supported while being mixed to each other, and the resulting catalyst may not achieve the catalytic activity derived from the "A" material and the catalytic activity derived from the "B" material. Even if the "A" catalyst material and the "B" catalyst material are successively applied by sputtering in this order, the "B" catalyst material sputtered later covers or overlies the "A" catalyst material sputtered earlier, which makes it difficult or impossible for the resulting catalyst to accomplish both the catalytic activity provided by the "A" catalyst material and the catalytic activity provided by the "B" catalyst material.

### SUMMARY OF THE INVENTION

The present invention provides a new method for improving drainage at an electrode joined to an electrolyte membrane.

A first aspect of the invention relates to an electrode joined to an electrolyte membrane of a polymer electrolyte fuel cell. The electrode contains electrically conductive, catalyst-loaded support particles, and at least two types of catalysts having different degrees of wettability with respect to water are supported on a surface of each of the support particles.

In the electrode constructed as described above, at least two types of catalysts having different degrees of wettability with respect to water are supported on the surface of each of the conductive support particles (e.g., carbonaceous particles, such as carbon particles) contained in the electrode. Therefore, each type of the catalysts shows its own catalytic activity, at a three-phase interface where the catalyst is supported on the surface of the support particle. Furthermore, since the two or more types of catalysts have different degrees of wettability with respect to water, water formed at the three-phase interface of the catalyst by means of catalysis of the catalyst having relatively small wettability moves to around the catalyst having relatively large wettability. The movement of water takes place on each of the support particles contained in the electrode, and also takes place between adjacent ones of the support particles, which leads to improved drainage at the electrode, and enhanced effectiveness in suppressing or preventing flooding. Consequently, the fuel cell having the electrode(s) of the first aspect of the invention joined to the electrolyte membrane can maintain adequate cell performance.

In this case, the above-indicated at least two types of catalysts supported on each of the support particles may include a platinum catalyst and a catalyst containing an alloy of platinum and cobalt. The platinum catalyst has a larger degree of wettability than the PtCo catalyst.

A second aspect of the invention relates to an electrolyte-dispersed solution used for forming an electrode joined to an electrolyte membrane of a polymer electrolyte fuel cell. The electrolyte-dispersed solution contains electrically conductive support particles to be loaded with catalysts, a proton-conducting electrolyte, and at least two types of catalysts having different degrees of wettability with respect to water, and the support particles, the proton-conducting electrolyte and the above-indicated at least two types of catalysts are dispersed in a solvent.

The above-indicated at least two types of catalysts having different degrees of wettability with respect to water are individually or independently loaded on each of the support particles contained in the electrolyte-dispersed solution. While it may be assumed that the loading of the catalysts on the support particles occurs while the catalysts and support particles are dispersed in the solvent, most of the catalyst loading is supposed to occur in the course of evaporation of the solvent.

A third aspect of the invention relates to a method of producing an electrolyte-dispersed solution used for forming an electrode joined to an electrolyte membrane of a polymer electrolyte fuel cell. The method includes the steps of preparing electrically conductive support particles loaded with a first catalyst having a first degree of wettability with respect to water, causing a proton-conducting electrolyte to contain a second catalyst having a second degree of wettability with respect to water that is different from the first degree of wettability, and mixing the electrolyte containing the second catalyst and the support particles loaded with the first catalyst, in a solvent, so that the electrolyte and the support particles are dispersed in the solvent.

In the electrolyte-dispersed solution obtained by the method as described above, while the electrolyte may be joined to the surfaces of the support particles while the electrolyte and the support particles are dispersed in the solvent, the electrolyte is more likely to be joined to the surfaces of the support particles in the course of evaporation of the solvent. According to the method as described above, the electrolyte-dispersed solution used for forming the electrode having high draining capability can be easily produced.

The present invention may be implemented in various forms. For example, the invention may be implemented in the form of, for example, an electrolyte-dispersed solution used for forming an electrode joined to an electrolyte membrane of a polymer electrolyte fuel cell, a polymer electrolyte fuel cell having an electrode(s) formed using the electrolyte-dispersed solution and an electrolyte membrane, a method of manufacturing the fuel cell, and so forth.

### BRIEF DESCRIPTION OF THE DRAWINGS

The foregoing and further objects, features and advantages of the invention will become apparent from the following description of embodiments with reference to the accompanying drawings, wherein like numerals are used to represent like elements, and wherein:
FIG. 1 is an explanatory view schematically showing the construction of a fuel cell according to one embodiment of the invention;
FIG. 2 is a flowchart representing the process of manufacturing the fuel cell of the embodiment of FIG. 1;
FIG. 3 is an explanatory view schematically showing catalyst-loaded support particles (carbon particles) contained in the formed electrode of the embodiment of FIG. 1;
FIG. 4 is an explanatory view schematically showing catalyst-loaded support particles (carbon particles) in a comparative example, for comparison with FIG. 3; and
FIG. 5 is a graph indicating the results of performance evaluations on the embodiment and Comparative Examples 1 - 3.

### DETAILED DESCRIPTION OF THE EMBODIMENTS

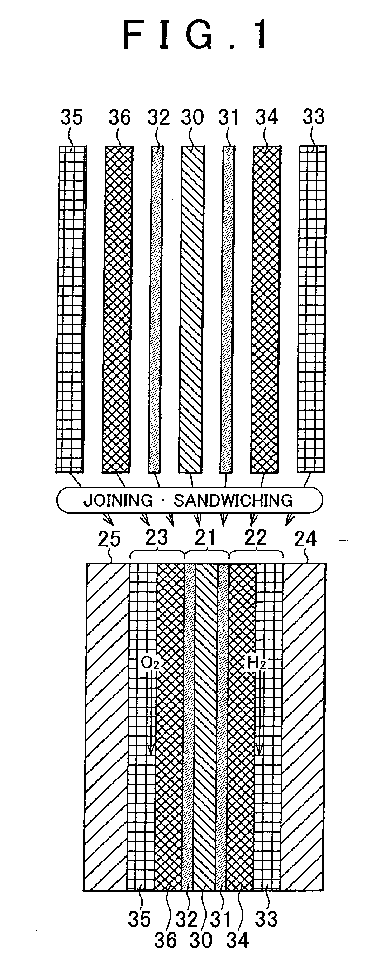

One embodiment of the invention will be described with reference to the drawings. FIG. 1 is an explanatory view schematically illustrating the construction of a fuel cell according to the embodiment of the invention. The fuel cell of this embodiment is a polymer electrolyte fuel cell, and has a stacked structure in which a plurality of power generation units (which may also be called "unit cells" or "cells"), one of which is shown in FIG. 1, are stacked together. The power generation unit includes a membrane electrode assembly (MEA) 21, and gas diffusion layers 22, 23 between which the membrane electrode assembly 21 is sandwiched, to form a MEA-sandwiching structure. The MEA-sandwiching structure is further sandwiched between separators 24, 25 disposed on the opposite sides thereof.

The membrane electrode assembly 21 includes an electrolyte layer 30, and a pair of electrodes 31, 32 joined to the opposite surfaces of the electrolyte layer 30 such that the electrolyte layer 30 is interposed between the electrodes 31, 32. The electrolyte layer 30 is a proton-conducting ion exchange membrane formed of a solid polymer material, such as fluororesin, and exhibits good electrical conductivity under wet conditions. In this embodiment, a Nafion membrane (manufactured by DuPont; "Nafion" is a registered trademark of DuPont) comprising perfluorosulfonic acid polymer is used as the electrolyte layer 30. The electrodes 31, 32 are porous structures formed of a catalyst-containing, highly conductive material, and provide catalyst electrodes having gas permeability. To form the electrodes, this embodiment uses an electrolyte-dispersed solution prepared by mixing a particulate support (e.g., carbon particles) that supports thereon a catalyst, such as platinum or an alloy of platinum and other metal, which promotes electrochemical reactions, with an electrolyte (the same Nafion solution as used for the electrolyte layer 30 in this embodiment) similar in properties to the electrolyte layer 30, such that the catalyst support is dispersed in the solution. The electrodes 31, 32 formed from the electrolyte-dispersed solution are formed in the form of films or membranes on the opposite surfaces of the electrolyte layer 30. The electrolyte-dispersed solution used for forming the electrodes 31, 32 will be described in detail later.

The gas diffusion layers 22, 23 are formed from a structural component having gas permeability and electron conductivity For example, the gas diffusion layers 22, 23 may be formed from a carbon material, such as carbon paper, or a metallic member, such as foam metal or metal mesh. The gas diffusion layers 22, 23 serve to supply gas used for electrochemical reactions to the electrodes 31, 32, and collect current from the electrodes 31, 32. The gas diffusion layer 22 includes a gas diffusion member 33 that is in contact with the separator 24, and an electrode-side gas diffusion member 34 that is in contact with the membrane electrode assembly 21. The gas diffusion layer 22 forms intra-cell fuel gas channels through which a fuel gas containing hydrogen passes, between the membrane electrode assembly 21 and the separator 24, so that the gas can be supplied to the electrode 31. The gas diffusion layer 23 includes a gas diffusion member 35 that is in contact with the separator 25, and an electrode-side gas diffusion member 36 that is in contact with the membrane electrode assembly 21. The gas diffusion layer 23 forms intra-cell oxidizing gas channels through which an oxidizing gas containing oxygen passes, between the membrane electrode assembly 21 and the separator 25, so that the gas can be supplied to the electrode 32.

While each of the gas diffusion layers 22, 23 consists of the separator-side gas diffusion member and electrode-side gas diffusion member that are joined to each other in this embodiment, the gas diffusion layer 22, 23 may be formed as a single gas diffusion layer.

In the gas diffusion layers 22, 23 as described above, the separator-side gas diffusion members 33, 35 may be formed of a porous body having a higher hardness than that of the electrode-side gas diffusion layers 22, 23. The hardness mentioned herein does not mean the hardness of the material of which the gas diffusion member is formed, but means the hardness of the member as a whole, and may be represented by, for example, the compressive modulus of elasticity. The formation of the gas diffusion layers 22, 23 in this manner contributes to preservation of the cell shape.

The separators 24, 25 are gas-impermeable components formed of a material having electron conductivity, and may be formed of, for example, a metal, such as stainless steel, or a carbon material. While the separators 24, 25 of this embodiment are in the form of thin plates or films, and their surfaces contacting the gas diffusion layers 22, 23 are formed as flat faces having no recesses and protrusions, separators having fuel gas channels or oxidizing gas channels may also be used. In this case, the gas diffusion layers need not serve as intra-cell fuel gas channels or intra-cell oxidizing gas channels, but may only serve to diffuse gas.

In a peripheral portion of the cell as the power generation unit shown in FIG. 1, seal members, such as gaskets, are provided for ensuring gastight sealing of the intra-cell fuel gas channels and intra-cell oxidizing gas channels. Also, in the cell peripheral portion, a plurality of gas manifolds (not shown) through which fuel gas or oxidizing gas flows are formed in parallel with the direction in which the cells are stacked. In operation, the fuel gas that flows through a fuel gas supply manifold, as one of the above-mentioned gas manifolds, is distributed to each cell, passes through the intra-cell fuel gas channel (gas diffusion layer 22) for use in an electrochemical reaction, and is then collected into a fuel gas discharge manifold as one of the gas manifolds. Similarly, the oxidizing gas that flows through an oxidizing gas supply manifold is distributed to each cell, passes through the intra-cell oxidizing gas channel (gas diffusion layer 23) for used in an electrochemical reaction, and is then collected into an oxidizing gas discharge channel. In FIG. 1, the fuel gas (H₂) and the oxidizing gas (O₂) flow through the intra-cell fuel gas channel and the intra-cell oxidizing gas channel, respectively, in the same direction in parallel with each other. However, these gases may flow in different directions, for example, in opposite directions or in directions orthogonal to each other, as well as in the same direction, depending on the arrangement or locations of the gas manifolds.

As the fuel gas supplied to the fuel cell, hydrogen-rich gas obtained by reforming hydrocarbon fuel, or high-purity hydrogen gas, may be used. As the oxidizing gas supplied to the fuel cell, air may be used.

Although not illustrated in FIG. 1, a coolant channel through which a coolant passes may be provided between each pair of adjacent unit cells, or each time a certain number of cells are stacked, for adjusting the internal temperature of the stacked structure. The coolant channel may be provided between adjacent unit cells, more specifically, between the separator 24 of one of the cells and the separator 25 of the other cell.

The cell is not limited to the layered structure as shown in FIG. 1, but may be constructed otherwise. For example, the membrane electrode assembly 21 may be sandwiched between separators disposed on the opposite sides thereof, and hydrogen-gas/air supply channels may be formed in surfaces of the separators that face the membrane electrode assembly 21.

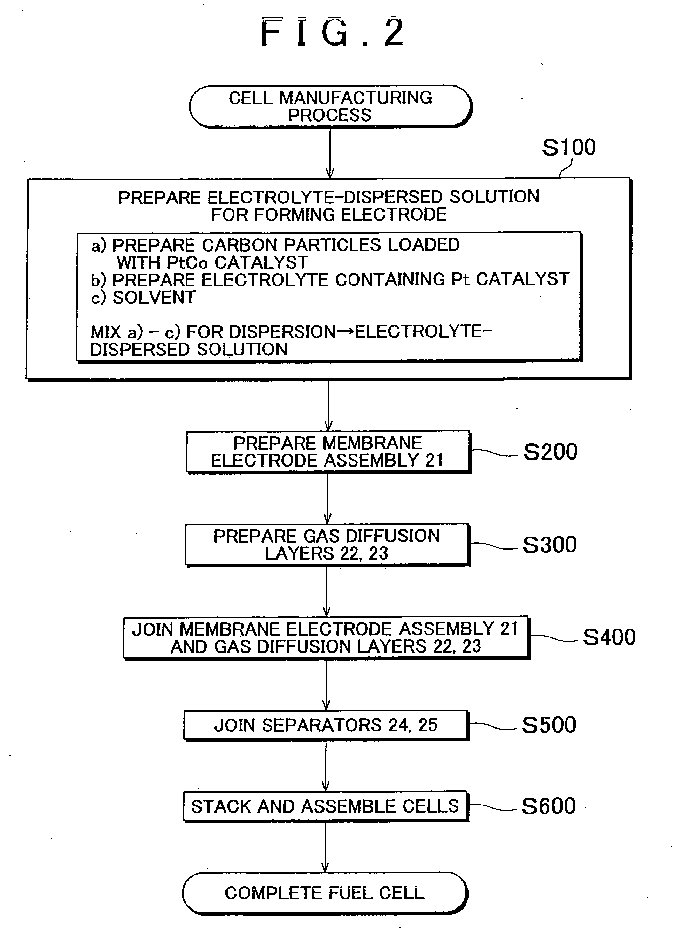

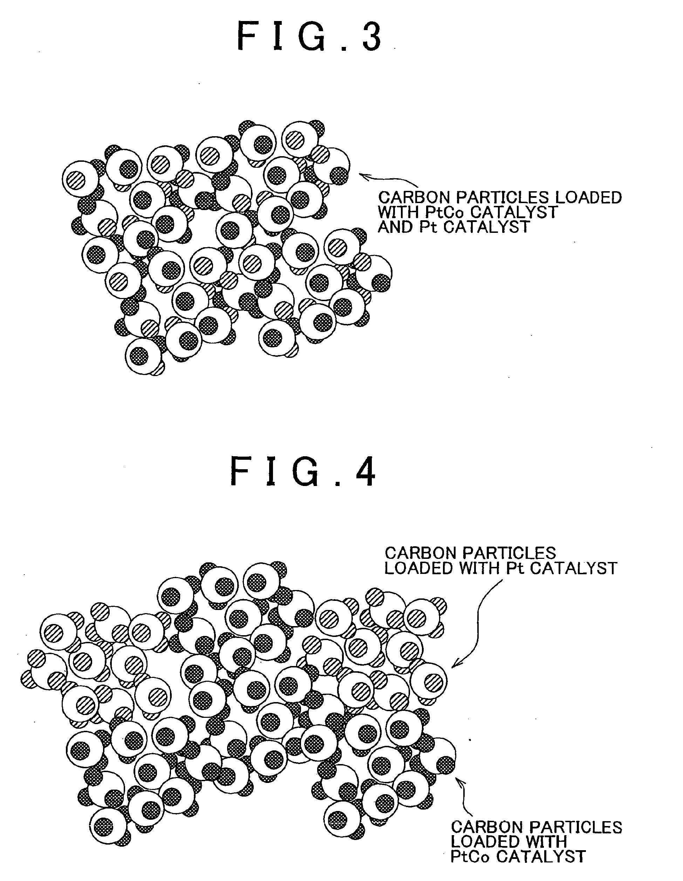

Next, the process of manufacturing the fuel cell constructed as described above will be described. FIG. 2 is a flowchart illustrating the process of manufacture for the fuel cell of this embodiment, and FIG. 3 is an explanatory view schematically showing a catalyst-loaded support (carbon particles) contained in the electrodes of this embodiment, while FIG. 4 is an explanatory view schematically showing a catalyst-loaded support (carbon particles) of a comparative example for comparison with FIG. 3.

As shown in FIG. 2, in the process of manufacturing the fuel cell according to this embodiment, an electrolyte-dispersed solution used for forming electrodes is initially prepared (step S100). In step 100, carbon particles that have been loaded with a PtCo catalyst are prepared, and an electrolyte solution is prepared in which a Pt catalyst having larger wettability with respect to water than the PtCo catalyst has been dispersed along with the electrolyte. The catalyst-loaded carbon particles are not particularly specified, but may be selected from various materials, such as carbon black and graphite. Also, the method of loading the carbon particles with the catalyst is not particularly specified, but may be selected from suitable loading methods, such as a colloid method and sputtering. In the colloid method, the PtCo catalyst is dissolved in a suitable solvent, and carbon particles are immersed or dispersed in the solution, so that noble metal is deposited onto the surfaces of the carbon particles. In this case, a reagent for precipitation of atoms may be added to the solution as needed, or a carbonaceous support (carbon particles) separated from the solution may be subjected to a reducing process under certain conditions.

In this embodiment, a PtCo catalyst having a 5:1 mole ratio of Pt to Co is used, and the PtCo catalyst is loaded on carbon black (carbon particles) by the colloid method, at a loading factor or rate (in terms of Pt by weight) of 20%. In this embodiment, after a solution in which PtCo-catalyst-loaded carbon particles are dispersed is filtered, the resultant substance is washed with pure water, dried in a vacuum at room temperature, crashed, and is finally reduced in a hydrogen stream at 200°C for two hours, to provide PtCo-catalyst-loaded carbon particles. The PtCo-catalyst-loaded carbon particles may be regarded as electrically conductive support particles that support a first catalyst thereon.

The loading of the catalyst on the support (e.g., carbon particles) may be performed by a generally adopted method, such as impregnation or coprecipitation, or an ion exchange method, as well as the above-mentioned colloid method. Also, the PtCo-catalyst-loaded carbon particles may be acquired from commercially available carbon particles that have been loaded with PtCo as a catalyst. The loading factor may also be equal to a value other than the above-indicated value (20%).

Before or after the preparation of the PtCo-catalyst-loaded carbon particles, or in parallel with the preparation of the particles, the electrolyte containing the Pt catalyst is prepared. In the preparation of the electrolyte, this embodiment uses a Nafion solution as an electrolyte solution containing the same electrolyte as that of the electrolyte layer 30, for example, a Nafion solution DE520 available from DuPont, and an aqueous solution of tetra-amine platinum chloride (Pt(NH₃)₄Cl₂). Initially, the Nafion solution and the aqueous solution of (Pt(NH₃)₄Cl₂) are measured so that the weight ratio of Nafion to Pt becomes equal to 10:1, and these solutions are stirred and mixed together. Then, the mixed solution is left standing for 24 hours, so that (Pt(NH₃)₄)²⁺ is contained in Nafion by an ion exchange reaction, and is washed sufficiently with purified water, dried, and then reduced for seven hours at 1 atmospheric pressure, in a hydrogen atmosphere of 180°C. Since there is a possibility of the presence of (Pt(NH₃)₄)²⁺ that was not reduced even after the reduction in the hydrogen atmosphere, the mixture may be immersed for five hours in sulfuric acid of 0.5 mol/l, for elution of unnecessary (Pt(NH₃)₄)²⁺ in the mixture, which was not reduced.

Since Nafion has proton conduction paths in its structure, it may be assumed that the inclusion of (Pt(NH₃)₄)²⁺ into Nafion occurs through deposition of (Pt(NH₃)₄)²⁺ onto the proton conduction paths. The thus obtained Nafion, which has gone through stirring and mixing of the Nafion solution and the (Pt(NH₃)₄Cl₂) aqueous solution and deposition (inclusion) of (Pt(NH₃)₄)²⁺, provides an electrolyte having proton conductivity, or an electrolyte containing a second catalyst (Pt catalyst) different from the above-mentioned first catalyst (PtCo catalyst).

In the manner as described above, the carbon particles loaded with the PtCo catalyst and Nafion containing the Pt catalyst are obtained. The PtCo-catalyst-loaded carbon particles and the Pt-catalyst-containing Nafion are respectively measured so that the weight ratio of the carbon particles to Nafion becomes equal to 1 : 1, and are mixed together, and the resulting mixture and a suitable solvent, such as a mixed solvent of ethanol and water, are stirred and mixed together. As a result, the electrolyte-dispersed solution in which the PtCo-catalyst-loaded carbon particles and the Pt-catalyst-containing Nafion are dispersed is prepared. In preparing this solution, a dispersing device, such as an ultrasonic homogenizer, may be used for accelerating the dispersion.

In the following step 200, the membrane electrode assembly 21 is fabricated using the electrolyte-dispersed solution prepared in step S100. More specifically, the electrolyte-dispersed solution is applied by coating to the front and rear surfaces of the electrolyte layer 30 by a suitable film forming method, such as a doctor blade method or screen printing, so as to form the electrodes 31, 32 on the opposite sides of the electrolyte layer 30. In another example, sheets may be produced by forming films from the electrolyte-dispersed solution, and the sheets may be pressed onto the electrolyte layer 30 so as to form the electrodes 31, 32 joined to the electrolyte layer 30. In a further example, the electrolyte-dispersed solution may be applied by coating to strippable sheets (e.g., Teflon sheets: Teflon is a registered trademark), and dried, to thus form electrode transfer sheets from the electrolyte-dispersed solution. Then, the electrolyte layer 30 may be sandwiched between the two electrode transfer sheets so that the electrode transfer sheets are joined to the opposite surfaces of the electrolyte layer 30, and the electrode transfer sheets may be bonded to the electrolyte layer 30 by thermocompression bonding at a certain temperature under a certain pressure. Thereafter, the Teflon sheets may be stripped off from the electrode transfer sheets. Thus, the electrodes transferred by means of the electrode transfer sheets may be formed on the opposite surfaces of the electrolyte layer 30. In the formation of the electrodes, the electrolyte-dispersed solution is used as an electrode forming paste.

Subsequently, the gas diffusion member 33 and the electrode-side gas diffusion member 34 are joined to each other, while the gas diffusion member 35 and the electrode-side gas diffusion member 36 are joined to each other, so as to prepare the gas diffusion layer 22 and the gas diffusion layer 23 (step S300). The gas diffusion members may be joined to each other by a suitable joining method, such as a press, without impairment of the gas diffusion capability thereof.

Next, the membrane electrode assembly 21, gas diffusion layer 22 and the gas diffusion layer 23 are joined together such that the membrane electrode assembly 21 is sandwiched between the gas diffusion layers 22, 23 (step S400). Here, the adjacent two members are joined to each other such that the two members are positively adhered to each other, to provide an increased area of contact therebetween, as compared with the case where the two members are merely laminated on each other. The membrane electrode assembly 21 and the electrode-side gas diffusion members 34, 36 of the gas diffusion layers 22, 23 on the opposite sides of the assembly 21 may be joined to each other by, for example, hot press or thermocompression bonding. Through application of heat and pressure, the above-mentioned electrode forming paste (the electrolyte-dispersed solution that has been subjected to hot isostatic pressing) that constitutes the electrodes 31, 32 is softened by heat, and the softened electrode forming paste conforms to the entire areas of the porous surfaces of the electrode-side gas diffusion members 34, 36, for an increase in the contact area, so that the electrodes 31, 32 are bonded to the gas diffusion members 34, 36.

The above-described steps S200 - S400 may be replaced by the following steps: the electrolyte-dispersed solution in which the PtCo-catalyst-loaded carbon particles and the Pt-catalyst-containing Nafion are dispersed is applied by coating to the electrode-side gas diffusion member 34 and electrode-side gas diffusion member 36 located on the opposite sides of the electrolyte layer 30, to form the electrodes 31, 32 on the gas diffusion members 34, 36, and then the electrolyte layer 30 is sandwiched between the gas diffusion members on which the electrodes have been formed.

Subsequent to step S400, the separators 24, 25 are joined to the gas diffusion layers on the opposite sides of the membrane electrode assembly 21 (step S500). Then, a certain number of assemblies each comprising the membrane electrode assembly 21, gas diffusion members 22, 23 and the separators 24, 25 are stacked together in a certain order (to repeatedly form the cell of FIG. 1), to provide the above-mentioned stacked structure, and a certain pressure is applied to the stacked structure in the stacking direction so as to retain the whole structure. In this manner, the fuel cell is completed (step S600). In this case, the separators 24, 25 may be joined to the gas diffusion members 33, 35 of the gas diffusion layers 22, 23 by a suitable method, such as welding. The welding process may be carried out by joining the gas diffusion members 33, 35 and the separators 24, 25 while increasing the area of contact therebetween, using a molten base material provided by at least one of the gas diffusion members 33, 35 and separators 24, 25, and/or a molten filler material. The assembling process of step S600 may include a step of providing the above-mentioned seal members, such as gaskets, in the peripheral portion of the stacked structure, and a step of forming coolant channels between adjacent unit cells.

In the case where coolant channels, or the like, are not formed between adjacent unit cells, the gas diffusion members 33, 35 of the gas diffusion layers 22, 23 of adjacent cells may be joined to the opposite surfaces of the separator between the cells. Namely, the cells may be stacked and joined together such that each separator is shared by the cells located on the opposite sides of the separator.

Next, the evaluation of the fuel cell manufactured as described above will be explained. First, the catalyst-loaded carbon particles contained in the electrode of this embodiment were observed with a microscope. For this observation, the electrode formed on the surface of the electrode-side gas diffusion member that faces the electrolyte layer was an object to be observed, for the sake of handling ease. As a sample to be observed, an electrolyte-dispersed solution in which the above-described PtCo-catalyst-loaded carbon particles and the Pt-catalyst-containing Nafion are both dispersed was applied by coating to the electrode-side gas diffusion member (about 0.3mm-thickness carbon paper (TGP-090 manufactured by Toray Industries, Inc.), which has a size of 5 cm x 5 cm), and dried, to provide an electrode as the sample to be observed. The carbon paper (catalyst electrode) on which the electrode was formed was observed with a transmission electron microscope (TEM) for an energy dispersive X-ray analysis. The result of the observation is schematically shown in FIG. 3. As shown in FIG. 3, it was confirmed that each of the carbon particles supports the PtCo catalyst and the Pt catalyst, individually, on the particle surface thereof. Namely, the PtCo catalyst and the Pt catalyst are not supported on the same carbon particle such that one of these catalysts covers or overlies the other catalyst, nor the mixture of these catalyst materials is supported on the carbon particle. Rather, the PtCo catalyst and the Pt catalyst are independently supported on different regions of the surface of each carbon particle. The carbon particles that individually support the PtCo catalyst and the Pt catalyst were contained in the electrode, such that these particles are located adjacent to or close to each other in the field of observation.

The PtCo catalyst and the Pt catalyst may be independently deposited on each of the carbon particles for the following reason. In the process of dispersion in the preparation of the electrolyte-dispersed solution, the Pt-catalyst-containing Nafion is located close to the carbon particles that have been loaded with the PtCo catalyst, or is dispersed around the carbon particles. When the electrode is formed through coating and drying of the electrolyte-dispersed solution, the solvent of the solution disappears at the electrode, whereby the Pt-catalyst-containing Nafion is deposited onto the PtCo-catalyst-loaded carbon particles. Since the surface area of each carbon particle over which the PtCo catalyst is not supported is far larger than that of the carbon particle over which the PtCo catalyst is supported, it may be assumed that the Pt-catalyst-containing Nafion is deposited on regions of the carbon particle where the PtCo catalyst is not supported. It is also assumed that the Pt-catalyst-containing Nafion is not deposited on all of the regions of the carbon particle where the PtCo catalyst is supported. Therefore, the PtCo catalyst has been already loaded on the surfaces of the carbon particles contained in the electrode thus formed, and the Pt catalyst contained in Nafion is also loaded, via Nafion, on the regions of the carbon particles on which the PtCo catalyst has not been loaded. This phenomenon agrees with the result of the microscopic observation as described above.

As a comparative example to be microscopically observed, an electrolyte-dispersed solution was prepared in which PtCo-catalyst-loaded carbon particles and Pt-catalyst-loaded carbon particles are dispersed along with Nafion, and an electrode was formed from the electrolyte-dispersed solution. The result of an observation of this comparative example is schematically shown in FIG. 4. As shown in FIG. 4, the PtCo-catalyst-loaded carbon particles and the Pt-catalyst-loaded carbon particles are contained in the electrode while flocculating or gathering into respective groups.

Next, the performance of fuel cells was evaluated. In producing the fuel cell of the embodiment used for the evaluation, the above-mentioned single carbon paper was used for the gas diffusion layers 22, 23 located closer to the electrolyte layer 30, and the thermocompression bonding of the gas diffusion layers was conducted for 10 min., at a temperature of 130°C and a pressure of 2MPa. The electrode 32 serving as the cathode is formed on a surface of the gas diffusion layer 22 that faces the electrolyte layer, by using the electrolyte-dispersed solution prepared in the above-described step S100, i.e., the electrolyte-dispersed solution in which the PtCo-catalyst-loaded carbon particles and the Pt-catalyst-containing Nafion are dispersed. The electrode 31 serving as the anode is formed by using an electrolyte-dispersed solution in which the Pt-catalyst-loaded carbon particles and Nafion are dispersed. Thus, different electrolyte-dispersed solutions were used for forming the electrodes on the cathode side and anode side for the following reason: the electrode on the anode side was formed by a known method because the problem of a build-up of water formed as a result of an electrochemical reaction at the anode can be regarded as insignificant or not being so serious. At the anode and the cathode, the amount of the catalyst in terms of Pt, or the amount of Pt, was 0.2 mg/cm². The size of the sample evaluated was 5 cm x 5 cm.

To prepare fuel cells of comparative examples to be compared with that of the above-described embodiment, the anode-side electrode 31 was formed in the same manner as that of the above-described embodiment, and the cathode-side electrode 32 was formed in the manner as described below. The amount of the catalyst, thermocompression bonding, and other features are the same as those of the above-described embodiment.

Comparative Example 1 is a fuel cell in which the electrode 32 was formed by using an electrolyte-dispersed solution in which Pt-catalyst-loaded carbon particles and Nafion were dispersed. Comparative Example 2 is a fuel cell in which the electrode 32 was formed by using an electrolyte-dispersed solution in which PtCo-catalyst-loaded carbon particles and Nafion were dispersed. Comparative Example 3 is a fuel cell in which the electrode 32 was formed by using an electrolyte-dispersed solution in which Pt-catalyst-loaded carbon particles and PtCo-catalyst-loaded carbon particles were dispersed along with Nafion.

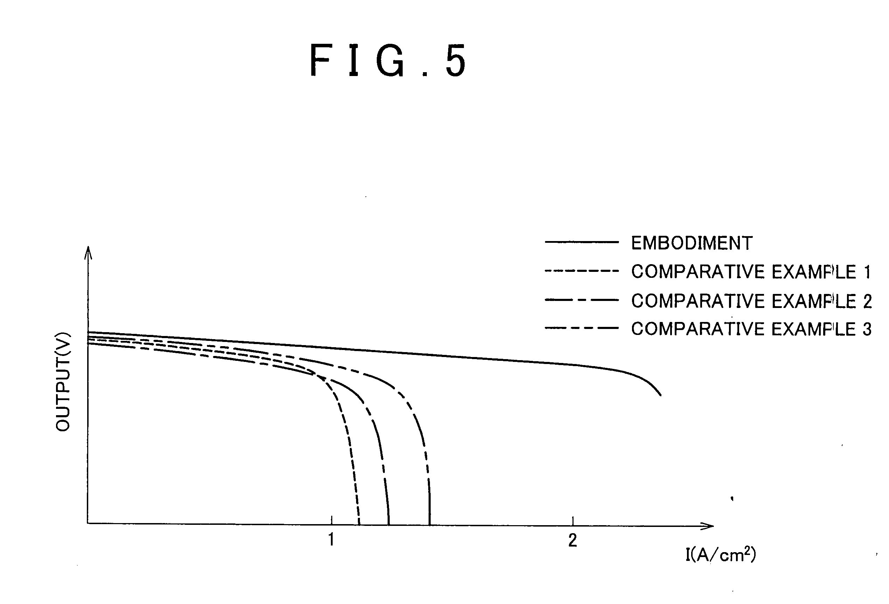

Each of the fuel cells of the above-described embodiment and comparative examples was set in a measurement device (not shown) capable of supplying fuel gas, and the output of the fuel cell was measured while a surface pressure applied to actual fuel cells was applied to the fuel cell of each example by means of an experimental arrangement. During the measurement, hydrogen gas having 1.5 atmospheric pressure, a temperature of 80°C and a dew point of 80°C was supplied to the anode, and air having 1.5 atmospheric pressure, a temperature of 80°C and a dew point of 75°C was supplied to the cathode. Namely, the experimental environment was determined such that the cathode was sufficiently humidified. FIG. 5 is a graph indicating the results of the performance evaluations on the embodiment and Comparative Examples 1 - 3.

As is understood from the graph of FIG. 5, the output was abruptly reduced once the current density exceeded 1A/cm² in the comparative examples, whereas no abrupt reduction in the output occurred until after the current density exceeded about 2A/cm² in this embodiment. Comparisons among Comparative Examples 1 - 3 reveal that the output of Comparative Example 3, out of the three comparative examples, was less likely to be reduced, or was abruptly reduced at a higher current density. These results will be explained in terms of the manner of loading the catalysts.

In Comparative Example 1 and Comparative Example 2, the carbon particles contained in the electrode are merely loaded with the Pt catalyst or the PtCo catalyst alone. In Comparative Example 3, the electrode contains both the Pt-catalyst-loaded carbon particles and the PtCo-catalyst-loaded carbon particles, as shown in FIG. 4. In the embodiment, the electrode contains the carbon particles that individually support the Pt catalyst and the PtCo catalyst, as shown in FIG. 3. The reduction in the output as observed in Comparative Examples 1, 2 is assumed to be caused by the occurrence of flooding at the cathode-side electrode (catalyst electrode), at which water formed from a cell reaction is likely to remain or build up in catalyst-loaded regions of the carbon particles, resulting in deterioration of drainage.

The output is less likely to be reduced in Comparative Example 3, as compared with Comparative Examples 1-2, probably for the following reason: since the carbon particles loaded with the PtCo catalyst having relatively small wettability and the carbon particles loaded with the Pt catalyst having relatively large wettability have a good chance of being in proximity to each other, water formed by catalysis at the carbon particles loaded with the small-wettability PtCo catalyst can move to the carbon particles loaded with the large-wettability Pt catalyst. For this reason, it is assumed that the drainage at the cathode electrode was more or less improved in Comparative Example 3, as compared with Comparative Examples 1 and 2, and the cell performance of Comparative Example 3 was enhanced compared to Comparative Examples 1 and 2.

In the embodiment, on the other hand, one carbon particle supports both of the PtCo catalyst having relatively small wettability and the Pt catalyst having relatively large wettability; therefore, at each of the carbon particles contained in the cathode-side electrode, water produced by catalysis at the PtCo catalyst having small wettability moves to around the Pt catalyst having large wettability, and the movement of the produced water also takes place among the carbon particles. As a result, the drainage at the cathode-side electrode is remarkably enhanced as compared with the comparative examples, and flooding can be suppressed or prevented with high effectiveness, thus assuring high cell performance.

In the present embodiment, the electrode is formed by using the electrolyte-dispersed solution (electrode forming paste) in which the carbon particles each supporting both the PtCo catalyst having small wettability and the Pt catalyst having large wettability are dispersed along with the electrolyte (Nafion), as explained above. According to this embodiment, the electrode having a high capability of draining water, owing to the movement of water in each of the carbon particles and the movement of water across the carbon particles, can be easily produced, and, consequently, the fuel cell in which flooding is highly effectively suppressed or prevented can be easily manufactured. Furthermore, the fuel cell easily manufactured according to the embodiment is able to maintain high cell performance for the long term, owing to effective suppression or prevention of flooding at the electrode(s) (in particular, the cathode-side electrode).

Also, in order to load both of the PtCo catalyst having small wettability and the Pt catalyst having large wettability on each of the carbon particles, the carbon particles that have been loaded with the small-wettability PtCo catalyst are simply dispersed in the solvent, along with the electrolyte (Nafion) containing the large-wettability Pt catalyst. Thus, the electrolyte-dispersed solution (electrode forming paste) used for forming electrodes having a high draining capability can be easily prepared.

While the embodiment of the present invention has been described above, it is to be understood that the invention is not limited to the above-described embodiment or its modified examples, but may be embodied in various forms, without departing from the principle of the invention. For example, the combination of catalysts having different degrees of wettability with respect to water is not limited to that of the PtCo catalyst and the Pt catalyst, but may be selected from various combinations. Also, while the carbon particles that have been loaded with the PtCo catalyst and the electrolyte containing the Pt catalyst are used in the above-described embodiment, in order to load each of the carbon particles with both of the PtCo catalyst and the Pt catalyst having different degrees of wettability, the carbon particles loaded with the Pt catalyst and the electrolyte containing the PtCo catalyst may be used instead. Furthermore, while perfluorosulfonic acid polymer, typically represented by Nafion, is used as the catalyst-containing electrolyte in the above-described embodiment, other polymers, such as styrene divinylbenzene sulfonic acid polymer, may also be used as the catalyst-containing electrolyte. Also, the catalyst-loaded support is not limited to the carbon particles, but may be metallic particles, such as gold.

While the electrolyte-dispersed solution of the above-described embodiment in which the support particles (carbon particles) loaded with different types of catalysts are dispersed along with the electrolyte is particularly suitable for forming the electrodes of polymer electrolyte fuel cells, the use or application of this solution is not limited to that of the embodiment, but the solution may be used for forming electrodes used in various electrochemical devices (e.g., a hydrogen generating apparatus in which the electrolysis of water occurs).

## Claims

1. An electrode joined to an electrolyte membrane (30) of a polymer electrolyte fuel cell, **characterized by** comprising electrically conductive, catalyst-loaded support particles, wherein at least two types of catalysts having different degrees of wettability with respect to water are supported on a surface of each of the support particles.

2. The electrode according to claim 1, wherein said at least two types of catalysts supported on each of the support particles comprise a platinum catalyst and a catalyst containing an alloy of platinum and cobalt.

3. An electrolyte-dispersed solution used for forming an electrode joined to an electrolyte membrane (30) of a polymer electrolyte fuel cell, which contains electrically conductive support particles to be loaded with catalysts,
a proton-conducting electrolyte, and at least two types of catalysts having different degrees of wettability with respect to water, wherein the support particles, the proton-conducting electrolyte and said at least two types of catalysts are dispersed in a solvent.

4. A method of producing an electrolyte-dispersed solution used for forming an electrode (31, 32) joined to an electrolyte membrane (30) of a polymer electrolyte fuel cell, **characterized by** comprising:
preparing electrically conductive support particles loaded with a first catalyst having a first degree of wettability with respect to water;
causing a proton-conducting electrolyte to contain a second catalyst having a second degree of wettability with respect to water that is different from said first degree of wettability; and
mixing the electrolyte containing the second catalyst and the support particles loaded with the first catalyst, in a solvent, so that the electrolyte and the support particles are dispersed in the solvent.

5. The method of producing an electrolyte-dispersed solution according to claim 4, wherein the first degree of wettability of the first catalyst with respect to water is smaller than the second degree of wettability of the second catalyst with respect to water.

6. The method of producing an electrolyte-dispersed solution according to claim 4 or 5, wherein the first catalyst is a catalyst comprising an alloy of platinum and cobalt, and the second catalyst is a platinum catalyst.

7. The method of producing an electrolyte-dispersed solution according to claim 4, 5 or 6, wherein the electrically conductive support particles loaded with the first catalyst is mixed with the electrolyte containing the second catalyst, such that a weight ratio of the support particles to the electrolyte becomes substantially equal to 1 : 1.

8. A polymer electrolyte fuel cell, **characterized by** comprising:
an electrolyte membrane (30); and
an electrode (31, 32) joined to the electrolyte membrane, wherein
the electrode is formed by using the electrolyte-dispersed solution produced by the method as defined in claim 3, and is joined to a surface of the electrolyte membrane.

9. A polymer electrolyte fuel cell, **characterized by** comprising:
an electrolyte membrane (30); and
an electrode (31, 32) joined to the electrolyte membrane, wherein
the electrode is formed by using the electrolyte-dispersed solution produced by the method as defined in claim 4, 5, 6 or 7, and is joined to a surface of the electrolyte membrane.

10. A method of manufacturing a polymer electrolyte fuel cell, **characterized by** comprising:
preparing an electrolyte membrane (30);
preparing electrically conductive support particles loaded with a first catalyst having a first degree of wettability with respect to water;
causing a proton-conducting electrolyte to contain a second catalyst having a second degree of wettability with respect to water that is different from said first degree of wettability; and
mixing the electrolyte containing the second catalyst and the support particles loaded with the first catalyst in a solvent;
preparing an electrolyte-dispersed solution in which the electrolyte and the support particles are dispersed such that the electrolyte is deposited on a surface of each of the support particles; and
applying the prepared electrolyte-dispersed solution by coating to a surface of the electrolyte membrane (30), or a surface of a gas diffusion member (34, 36) that faces the electrolyte membrane, and then drying the electrolyte-dispersed solution so as to form an electrode (31, 32) to be joined to the surface of the electrolyte membrane.
